# EUROPEAN PATENT APPLICATION

(11) **EP 3 522 530 A1**
(43) Date of publication of application: **07.08.2019**
(21) Application number: 16917123.8
(22) Date of filing: 28.09.2016
(51) Int. Cl.: H04N 17/02

(54) **SYSTEM PERFORMANCE IMPROVEMENT METHOD, SYSTEM PERFORMANCE IMPROVEMENT DEVICE AND DISPLAY DEVICE**

(71) Applicant: Shenzhen Royole Technologies Co., Ltd., Shenzhen, Guangdong 518052 (CN)
(72) Inventor: YE, Zegang, Shenzhen, Guangdong 518052 (CN)
(74) Representative: Hamer, Christopher K.
(86) International application number: PCT/CN2016/100565
(87) International publication number: WO 2018/058368

(57) **Abstract**

Disclosed are a method for improving system performance, a device for improving system performance, and a display apparatus. The method may include the follows. Whether an abnormity occurs in vertical synchronous signals within a period is determined (101), and based on a determination that the abnormity occurs in the vertical synchronous signals within the period, system performance of the display apparatus is improved by adopting a preset scheme (102). When the abnormity occurs in the vertical synchronous signals within the period, it is determined that the display apparatus experiences a display lag, at this point the system performance of the display apparatus is improved by adopting the preset scheme, thereby optimizing the system of the display apparatus, and solving a problem of lag appearing in a process of displaying information by the display apparatus.

## Description

### TECHNICAL FIELD

The present disclosure relates to the field of display technology, and particularly to a method for improving system performance, a device for improving system performance, and a display apparatus.

### BACKGROUND

When a display apparatus displays information, vertical synchronous signals are needed to update a user interface (UI). To display images smoothly, it is needed to ensure that time intervals each between two adjacent vertical synchronous signals of all vertical synchronous signals within a period are all identical (for example, the time intervals are all 16.7ms), and that a total number of the vertical synchronous signals within the period reaches a preset value, for example, there are 60 vertical synchronous signals per second. When all the time intervals are not completely identical (for example, the time interval between the first vertical synchronous signal and the second vertical synchronous signal is different from that between the second vertical synchronous signal and the third vertical synchronous signal, and so on), and/or the number of the vertical synchronous signals within the period does not reach the preset value (for example, the number of vertical synchronous signals within 1 second is less than 60), the displayed image may be torn. It indicates that the system performance of the display apparatus, for example, the performance of a central processing unit (CPU), the performance of a graphic processing unit (GPU), and the like, cannot support the smooth display of the images.

### SUMMARY

In view of the above, embodiments of the present disclosure provide a method for improving system performance, a device for improving system performance, and a display apparatus, so as to improve system performance of the display apparatus, and solve a problem of lag appearing in a process of displaying information by the display apparatus.

The method for improving system performance provided by the embodiments of the present disclosure may be applied in the display apparatus. The method may include the follows. Whether an abnormity occurs in vertical synchronous signals within a period is determined, and based on a determination that the abnormity occurs in the vertical synchronous signals within the period, system performance of the display apparatus is improved by adopting a preset scheme.

The device for improving system performance provided by the embodiments of the present disclosure may be applied in the display apparatus. The device for improving system performance may include a vertical synchronous signal determining module configured to determine whether an abnormity occurs in vertical synchronous signals within a period, and a system performance controlling module, configured to improve, based on a determination that the abnormity occurs in the vertical synchronous signals within the period, system performance of the display apparatus by adopting a preset scheme.

The embodiments of the present disclosure provide a display apparatus. The display apparatus may include a memory storing a set of program codes, and a processor configured to invoke the program codes to perform following acts. Whether an abnormity occurs in vertical synchronous signals within a period is determined, and based on a determination that abnormity occurs in the vertical synchronous signals within the period, system performance of the display apparatus is improved by adopting a preset scheme.

In the embodiment, when the abnormity occurs in the vertical synchronous signals within the period, it is determined that the display apparatus experiences a display lag, at this point the system performance of the display apparatus is improved by adopting the preset scheme, thereby optimizing the system of the display apparatus, and solving a problem of lag appearing in the process of displaying information by the display apparatus.

### BRIEF DESCRIPTION OF THE DRAWINGS

In order to describe technical solutions in embodiments of the present disclosure more clearly, the following briefly introduces the accompanying drawings required for describing the embodiments. Apparently, the accompanying drawings in the following description illustrate some embodiments of the present disclosure. Those of ordinary skill in the art may also obtain other drawings based on these accompanying drawings without creative efforts
FIG. 1 is a schematic flow chart illustrating a method for improving system performance according to an embodiment of the present disclosure.
FIG. 2 is a schematic structural diagram illustrating a device for improving system performance according to an embodiment of the present disclosure.
FIG. 3 is a schematic structural diagram illustrating a display apparatus according to an embodiment of the present disclosure.

### DETAILED DESCRIPTION

Below technical solutions of embodiments of the present disclosure will be described clearly and completely in conjunction with the accompanying drawings of the embodiments of the present disclosure. Apparently, some but not all of embodiments of the present disclosure are described. Based on the embodiments of the present disclosure, all the other embodiments, which a person ordinarily skilled in the art obtains without paying creative efforts, fall within the scope of protection of the present disclosure.

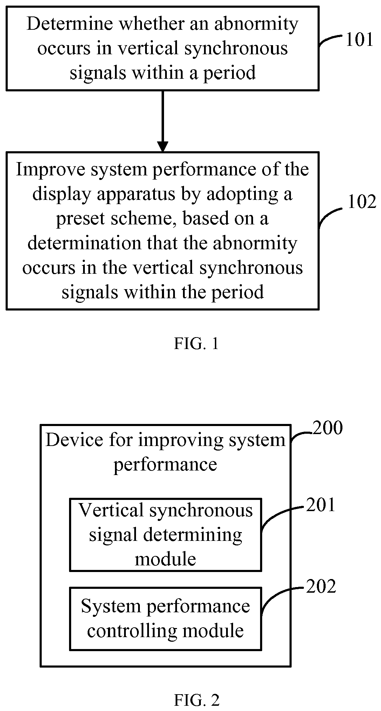

Referring to FIG. 1, FIG. 1 illustrates a flow chart of a method for improving system performance according to an embodiment of the present disclosure. The method for improving system performance is applied in a display apparatus. The display apparatus may have a function of image display or text display, such as a smart phone, a tablet computer, a computer, or a television. The method for improving system performance may include the following steps.

Step 101, whether an abnormity occurs in vertical synchronous signals within a period is determined.

Step 102, when the abnormity occurs in the vertical synchronous signals within the period, system performance of the display apparatus is improved by adopting a preset scheme.

In the implementation, when the abnormity occurs in the vertical synchronous signals within the period, it is determined that the display apparatus experiences a display lag. At this point the system performance of the display apparatus is improved by adopting the preset scheme, thereby optimizing the system of the display apparatus, and solving a problem of lag appearing in a process of displaying information by the display apparatus.

In an implementation, determining whether the abnormity occurs in the vertical synchronous signals within the period may include the follows. According to an arrival time of each of the vertical synchronous signals, a time interval of each two adjacent vertical synchronous signals is computed to obtain multiple time intervals. When the multiple time intervals are not completely identical, it is determined that the abnormity occurs in the vertical synchronous signals within the period. For example, when each time interval is 16.7ms, it is determined that the vertical synchronous signals within the period are normal, and when some time intervals are 16.7ms, and some time intervals are not 16.7ms, it is determined that the abnormity occurs in the vertical synchronous signals within the period.

In another implementation, determining whether the abnormity occurs in the vertical synchronous signals within the period may include the follows. Whether a total number of the vertical synchronous signals within the period reaches a preset value is determined. When the total number of the vertical synchronous signals within the period is less than the preset value, it is determined that the abnormity occurs in the vertical synchronous signals within the period. For example, when the number of the vertical synchronous signals within 1 second is less than 60, it is determined that abnormity occurs in the vertical synchronous signals within the period.

When it is determined that the abnormity occurs in the vertical synchronous signals within the period, it indicates that lag appears in the process of displaying information by the display apparatus, and at this point the system performance of the display apparatus needs to be adjusted to optimize the system of the display apparatus.

In the embodiment, first, the system performance of the display apparatus is improved by improving performance of a central processing unit (CPU) of the display apparatus. Improving the performance of the CPU may specifically include the follows. Current load of the CPU is obtained, and whether the current load of the CPU exceeds a preset threshold (for example, the preset threshold may be 80%) is determined. When the current load exceeds the preset threshold, a current work frequency of the CPU is further obtained, and whether the current work frequency of the CPU reaches a maximum work frequency is determined. When the current work frequency of the CPU does not reach the maximum work frequency, increase the work frequency of the CPU of the display apparatus , for example, the work frequency of the CPU is increased to the maximum work frequency. The maximum work frequency of the CPU is related to a model of the CPU. Priorities of processes of the display apparatus can be further adjusted. Specifically, a process of image display is identified to be a process having a highest priority in a real-time scheduling scheme, thus the process of image display can be first scheduled, and the display apparatus can finish image display in the fastest way.

In the implementation, after improving the system performance of the display apparatus by improving the performance of the CPU, whether an abnormity occurs in vertical synchronous signals within a next period is further determined. When the abnormity still occurs in the vertical synchronous signals within the next period, computation capability of a graphic processing unit (GPU) is improved to further improve the system performance of the display apparatus. Improving the computation capability of the GPU may specifically include the follows. When the GPU is in a full-speed mode, the scheduling mode of the GPU is changed to a high-performance mode. In the high-performance mode, the buffer of the GPU is set to be maximum, and when rendering an image, the image is cut into multiple fragments. Rendering capability can be improved by increasing the buffer and rendering in a block computing manner.

In the implementation, after the system performance of the display apparatus is improved by improving the computation capability of the GPU, whether an abnormity occurs in vertical synchronous signals within a next period is determined. When the abnormity still occurs in the vertical synchronous signals within the next period, an image buffer of the display apparatus is increased to further improve the system performance of the display apparatus. When rendering a user interface (UI), the system of the display apparatus may apply for temporary memory spaces, tags the memory spaces which the system applies for (but the memory spaces are not released), and arranges the memory spaces according to sizes. When applying for memory spaces next time, if the buffer still has enough space, the buffer can be directly used, and if the buffer does not have enough space, the memory space previously applied for needs to be released, which is a waste of time. Therefore, by increasing the image buffer of the display apparatus can improve the system performance of the display apparatus.

In the implementation, after the system performance of the display apparatus is improved by increasing the image buffer, whether an abnormity occurs in vertical synchronous signals within a next period is determined. When the abnormity still occurs in the vertical synchronous signals within the next period, rendering image is accelerated via the GPU to further improve the system performance of the display apparatus. Generally, the CPU is adopted to render an image by default, and when the CPU is adopted to render an image, it may take a long time to convert logic data into pixel points. When it needs to improve the system performance of the display apparatus, the GPU can be adopted to accelerate image rendering. When the GPU is adopted to accelerate image rendering, open graphic library (OpenGL) instructions are used to describe drawing actions, and then the OpenGL instructions are transmitted to the GPU at once. The rendering speed of the GPU is fast, thus, adopting the GPU to accelerate image rendering can improve the system performance of the display apparatus.

In the implementation, after the system performance of the display apparatus is improved by accelerating the image rendering via the GPU, whether an abnormity occurs in vertical synchronous signals within a next period is further determined. When the abnormity still occurs in the vertical synchronous signals within the next period, image composition capability of the display apparatus is improved to further improve the system performance of the display apparatus. Generally, the CPU and the GPU can be used to perform image composition. A speed of performing image composition by the GPU is faster than that of performing image composition by the CPU. When the display apparatus further includes a mobile display processor (MDP), the MDP can be employed to perform image composition. A speed of performing image composition by the MDP is faster than that of performing image composition by the GPU, since when the MDP is employed to perform image composition, after image composition, the composited image can be directly transmitted out via a display interface, without undergoing address conversion or data copy. Thus, when the system performance of the display apparatus needs to be improved, a manner in which the speed of image composition is faster can be selected to perform image composition, thereby improving the image composition capability of the display apparatus to improve the system performance of the display apparatus.

In the implementation, after the system performance of the display apparatus is improved by improving the image composition capability of the display apparatus, whether an abnormity occurs in vertical synchronous signals within a next period is further determined. When the abnormity still occurs in the vertical synchronous signals within the next period, the OpenGL drawing instructions of the display apparatus are reduced to further improve the system performance of the display apparatus. If the UI experiences lag when the GPU has been already employed to accelerate image rendering, before transmitting the OpenGL drawing instructions, redundant drawing instructions can be filtered to reduce cost of the GPU and reduce computation time, thereby improving the system performance of the display apparatus.

In the implementation, after the system performance of the display apparatus is improved by reducing the OpenGL drawing instructions, whether an abnormity occurs in vertical synchronous signals within a next period is further determined. When the abnormity still occurs in the vertical synchronous signals within the next period, bit depth of the display apparatus is reduced to further improve the system performance of the display apparatus. When a format such as png, bmp, and the like is converted into RGB, a small bit depth is selected, for example, a 16-bit depth is selected, thus the performance of the whole system is saved, data bandwidth is reduced, thereby doubling the computation speed of the system, and improving the system performance of the display apparatus.

After the system performance of the display apparatus is improved by reducing the bit depth, if lag still appears in the process of displaying information by the display apparatus, the display apparatus may need to be rebooted.

In the implementation, when the display apparatus displays information, if lag appears, by sequentially adopting the manners in which the system performance of the display apparatus is improved to improve the system performance of the display apparatus, a problem of lag appearing in the process of displaying information by the display apparatus can be better resolved.

In another implementation, the system performance of the display apparatus is improved by adopting at least one of following schemes: improving the performance of the CPU, improving the computation capability of the GPU, enlarging the image buffer of the display apparatus, accelerating image rendering via the GPU, improving the image composition capability of the display apparatus, reducing the OpenGL drawing instructions of the display apparatus, and reducing the bit depth of the display apparatus. For specific implementation manners of the above schemes, the above description can be referred, and details will not be repeated herein. When lag appears in a process of displaying information by the display apparatus, the system performance of the display apparatus can be improved by adopting one of the above schemes or a combination of more of the above schemes. In the implementation, for adopting which of the above schemes to improve the system performance of the display apparatus, adopting a combination of which of the schemes to improve the system performance of the display apparatus, and adopting which sequence to execute more of the above schemes to improve the system performance of the display apparatus, there is no specific limit, and a selection can be flexibly made according to an actual condition.

FIG. 2 is a schematic structural view illustrating a device for improving system performance according to an embodiment of the present disclosure. The device 200 for improving system performance is applied in a display apparatus. The display apparatus may have a function of image display or text display, such as a smart phone, a tablet computer, a computer, or a television. The device 200 for improving system performance may include a vertical synchronous signal determining module 201 and a system performance controlling module 202.

The vertical synchronous signal determining module 201 may be configured to determine whether an abnormity occurs in vertical synchronous signals within a period.

The system performance control module 202 may be configured to improve system performance of the display apparatus by adopting a preset scheme, based on that the vertical synchronous signal determining module 201 determines that the abnormity occurs in the vertical synchronous signals within the period.

In the implementation, when the abnormity occurs in the vertical synchronous signals within the period, it is determined that the display apparatus experiences a display lag, at this point the system performance of the display apparatus is improved by adopting the preset scheme, thereby optimizing the system of the display apparatus, and solving a problem of lag appearing in a process of displaying information by the display apparatus.

In an implementation, the vertical synchronous signal determining module 201 configured to determine whether the abnormity occurs in the vertical synchronous signals within the period may include the follows. The vertical synchronous signal determining module 201 obtains multiple time intervals by computing a time interval of each two adjacent vertical synchronous signals according to an arrival time of each of the vertical synchronous signals, and determines that the abnormity occurs in the vertical synchronous signals within the period when the multiple time intervals are not identical. For example, when each time interval is 16.7ms, it is determined that the vertical synchronous signals within the period are normal, and when some time intervals are 16.7ms, and some time intervals are not 16.7ms, it is determined that the abnormity occurs in the vertical synchronous signals within the period.

In another implementation, the vertical synchronous signal determining module 201 configured to determine whether the abnormity occurs in the vertical synchronous signals within the period may include the follows. The vertical synchronous signal determining module 201 determines whether a total number of the vertical synchronous signals within the period reaches a preset value, and determines that the abnormity occurs in the vertical synchronous signals within the period when the total number of the vertical synchronous signals within the period is less than the preset value. For example, when the number of the vertical synchronous signals within 1 second is less than 60, it is determined that abnormity occurs in the vertical synchronous signals within the period.

When it is determined that the abnormity occurs in the vertical synchronous signals within the period, it indicates that lag appears in the process of displaying information by the display apparatus, and at this point the system performance of the display apparatus needs to be adjusted to optimize the system of the display apparatus.

In the implementation, the system performance controlling module 202 first improves the system performance of the display apparatus by improving performance of a CPU of the display apparatus. The system performance controlling module 202 configured to improve the performance of the CPU may specifically include the follows. The system performance controlling module 202 obtains current load of the CPU, and determines whether the current load of the CPU exceeds a preset threshold (for example, the preset threshold may be 80%). When the current load exceeds the preset threshold, the system performance controlling module 202 further obtains a current work frequency of the CPU, and determines whether the current work frequency of the CPU reaches a maximum work frequency. When the current work frequency of the CPU does not reach the maximum work frequency, the system performance controlling module 202 increases the work frequency of the CPU, for example, increase the work frequency of the CPU to the maximum work frequency. The maximum work frequency of the CPU is related to a model of the CPU. The system performance controlling module 202 may further adjust priorities of processes of the display apparatus. Specifically, the system performance controlling module 202 identifies a process of image display to be a process having a highest priority in a real-time scheduling scheme, thus the process of image display can be first scheduled, and the display apparatus can finish image display in the fastest way.

In the implementation, after the system performance controlling module 202 improves the system performance of the display apparatus by improving the performance of the CPU, the vertical synchronous signal determining module 202 further determines whether an abnormity occurs in vertical synchronous signals within a next period. When the abnormity still occurs in the vertical synchronous signals within the next period, the system performance controlling module 202 improve computation capability of a GPU of the display apparatus to further improve the system performance of the display apparatus. The system performance controlling module 202 configured to improve the computation capability of the GPU may specifically include the follows. When the GPU is in a full-speed mode, the system performance controlling module 202 changes the scheduling mode of the GPU to a high-performance mode. In the high-performance mode, the system performance controlling module 202 sets the buffer of the GPU to be maximum, and when rendering an image, the system performance controlling module 202 cuts the image into multiple fragments. Rendering capability can be improved by increasing the buffer and rendering in a block computing manner.

In the implementation, after the system performance controlling module 202 improves the system performance of the display apparatus by improving the computation capability of the GPU, the vertical synchronous signal determining module 201 further determines whether an abnormity occurs in vertical synchronous signals within a next period. When the abnormity still occurs in the vertical synchronous signals within the next period, the system performance controlling module 202 increases an image buffer of the display apparatus to further improve the system performance of the display apparatus. When rendering a user interface (UI), the system of the display apparatus may apply for temporary memory spaces, tags the memory spaces which the system applies for (but the memory spaces are not released), and arranges the memory spaces according to sizes. When applying for memory spaces next time, if the buffer still has enough space, the buffer can be directly used, and if the buffer does not have enough space, the memory space previously applied for needs to be released, which is a waste of time. Therefore, by increasing the image buffer of the display apparatus can improve the system performance of the display apparatus.

In the implementation, after the system performance controlling module 202 improves the system performance of the display apparatus by increasing the image buffer, the vertical synchronous signal determining module 201 further determines whether an abnormity occurs in vertical synchronous signals within a next period. When the abnormity still occurs in the vertical synchronous signals within the next period, the system performance controlling module 202 accelerates image rendering via the GPU to further improve the system performance of the display apparatus. Generally, the CPU is adopted to render an image by default, and when the CPU is adopted to render an image, it may take a long time to convert logic data into pixel points. When it needs to improve the system performance of the display apparatus, the GPU can be adopted to accelerate image rendering. When the GPU is adopted to accelerate image rendering, open graphic library (OpenGL) instructions are used to describe drawing actions, and then the OpenGL instructions are transmitted to the GPU at once. The rendering speed of the GPU is fast, thus, adopting the GPU to accelerate image rendering can improve the system performance of the display apparatus.

In the implementation, after the system performance controlling module 202 improves the system performance of the display apparatus by accelerating the image rendering via the GPU, the vertical synchronous signal determining module 201 further determines whether an abnormity occurs in vertical synchronous signals within a next period. When the abnormity still occurs in the vertical synchronous signals within the next period, the system performance controlling module 202 improves image composition capability of the display apparatus to further improve the system performance of the display apparatus. Generally, the CPU and the GPU can be used to perform image composition. A speed of performing image composition by the GPU is faster than that of performing image composition by the CPU. When the display apparatus further includes a mobile display processor (MDP), the MDP can be employed to perform image composition. A speed of performing image composition by the MDP is faster than that of performing image composition by the GPU, since when the MDP is employed to perform image composition, after image composition, the composited image can be directly transmitted out via a display interface, without undergoing address conversion or data copy. Thus, when the system performance of the display apparatus needs to be improved, a manner in which the speed of image composition is faster can be selected to perform image composition, thereby improving the image composition capability of the display apparatus to improve the system performance of the display apparatus.

In the implementation, after the system performance controlling module 202 improves the system performance of the display apparatus by improving the image composition capability of the display apparatus, the vertical synchronous signal determining module 201 further determines whether an abnormity occurs in vertical synchronous signals within a next period. When the abnormity still occurs in the vertical synchronous signals within the next period, the system performance controlling module 202 reduces OpenGL drawing instructions of the display apparatus to further improve the system performance of the display apparatus. If the UI experiences lag when the GPU has been already employed to accelerate image rendering, before transmitting the OpenGL drawing instructions, redundant drawing instructions can be filtered to reduce cost of the GPU and reduce computation time, thereby improving the system performance of the display apparatus.

In the implementation, after the system performance controlling module 202 improves the system performance of the display apparatus by reducing the OpenGL drawing instructions, the vertical synchronous signal determining module further determines whether an abnormity occurs in vertical synchronous signals within a next period. When the abnormity still occurs in the vertical synchronous signals within the next period, the system performance controlling module 202 reduces bit depth of the display apparatus to further improve the system performance of the display apparatus. When a format such as png, bmp, and the like is converted into RGB, a small bit depth is selected, for example, a 16-bit depth is selected, thus the performance of the whole system is saved, data bandwidth is reduced, thereby doubling the computation speed of the system, and improving the system performance of the display apparatus.

After the system performance of the display apparatus is improved by reducing the bit depth, if lag still appears in the process of displaying information by the display apparatus, the display apparatus may need to be rebooted.

In the implementation, in the process of displaying information by the display apparatus, if lag appears, by sequentially adopting the manners in which the system performance of the display apparatus is improved to improve the system performance of the display apparatus, a problem of lag appearing in the process of displaying information in by the display apparatus can be better resolved.

In another implementation, the system performance controlling module 202 improves the system performance of the display apparatus by adopting at least one of following schemes: improving the performance of the CPU, improving the computation capability of the GPU, enlarging the image buffer of the display apparatus, accelerating image rendering via the GPU, improving the image composition capability of the display apparatus, reducing the OpenGL drawing instructions of the display apparatus, and reducing the bit depth of the display apparatus. For specific implementation manners of the above schemes, the above description can be referred, and details will not be repeated herein. If lag appears in the process of displaying information by the display apparatus, the system performance of the display apparatus can be improved by adopting one of the above schemes or a combination of more of the above schemes. In the implementation, for adopting which of the above schemes to improve the system performance of the display apparatus, adopting a combination of which of the schemes to improve the system performance of the display apparatus, and adopting which sequence to execute more of the above schemes to improve the system performance of the display apparatus, there is no specific limit, and a selection can be flexibly made according to actual condition.

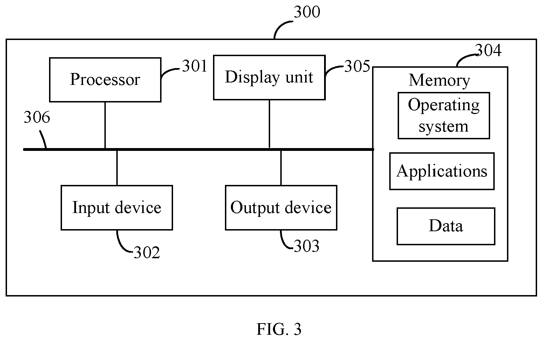

Referring to FIG. 3, in an embodiment of the present disclosure, a display apparatus 300 can perform the method for improving system performance illustrated in the embodiments of the present disclosure. The display apparatus may have a function of image display or text display, such as a smart phone, a tablet computer, a computer, or a television. The display apparatus 300 may include at least one processor 301, at least one input device 302, at least one output device 303, a memory 304, a display unit 305, and so on. These components communicate with each other via one or more buses 306. A person of ordinary skill in the art can understand that the structure of the display apparatus illustrated in FIG. 3 does not limit the present disclosure. The display apparatus may be a bus structure or a star structure. The display apparatus may include more or fewer components than illustrated, or may combine certain components, or may include different components.

In the embodiment of the present disclosure, the processor 301 is the control center of the mobile phone, it connects various parts of the whole display apparatus 300 through various interfaces and lines, runs or executes software programs and/or units stored in the memory 304 and invokes data stored in the memory 304 to perform various functions of the display apparatus 300 and process data. The processor 301 may be formed by one or more integrated circuits (ICs). For example, the processor 301 may be formed by a single encapsulated IC, and also may be formed by connecting multiple encapsulated ICs having the same function or having different functions. For example, the processor 301 may just include a CPU, and also may be a combination of the CPU, a digital signal processor (DSP), a GPU, and various control chips. In the embodiment of the present disclosure, the CPU may include a signal core, or may include multiple cores.

In the embodiment of the present disclosure, the input device 302 may include a standard touch screen, a keyboard, and so on, and also may include a wired interface, a wireless interface, and so on, to realize interaction between a user and the display apparatus 300.

In the embodiment of the present disclosure, the output device 303 may be a loudspeaker, and may include a wired interface, a wireless interface, and so on.

In the embodiment of the present disclosure, the memory 304 may include at least one of the follows: a random access memory, a nonvolatile memory, and an external memory. The memory 304 may store program codes. The processor 301 performs the above method for improving system performance by invoking the program codes stored in the memory 304. The memory 304 mainly includes a program storage area and a data storage area. The program storage area may store an operating system, applications for at least one function, and so on. The data storage area may store data created according to usage of the display apparatus. In the embodiment of the present disclosure, the operating system may be the Android system, the iOS system, the Windows operating system, or other.

In the embodiment of the present disclosure, the display unit 305 is configured to display information such as images, text, and so on, and may be a light-emitting diode display unit, a liquid crystal display (LCD), and so on.

The above disclosures illustrate preferable embodiments of the present disclosure. It should be pointed out that a person of ordinary skill in the art can make several changes and polish without departing from the principle of the present disclosure, and these changes and polish shall be deemed as the scope of protection of the present disclosure.

## Claims

1. A method for improving system performance, the method being applied in a display apparatus, the method comprising:
determining whether an abnormity occurs in vertical synchronous signals within a period; and
improving system performance of the display apparatus by adopting a preset scheme, based on a determination that the abnormity occurs in the vertical synchronous signals within the period.

2. The method for improving system performance of claim 1, wherein the determining whether an abnormity occurs in vertical synchronous signals within a period comprises:
obtaining multiple time intervals by computing a time interval of each two adjacent vertical synchronous signals according to an arrival time of each of the vertical synchronous signals; and
determining that the abnormity occurs in the vertical synchronous signals within the period when the multiple time intervals are not identical.

3. The method for improving system performance of claim 1, wherein the determining whether an abnormity occurs in vertical synchronous signals within a period comprises:
determining that the abnormity occurs in the vertical synchronous signals within the period when a total number of the vertical synchronous signals within the period is less than a preset value.

4. The method for improving system performance of claim 1, wherein the improving system performance of the display apparatus by adopting a preset scheme comprises:
improving the system performance of the display apparatus by adopting at least one of following schemes: improving performance of a central processing unit of the display apparatus, improving computation capability of a graphic processing unit of the display apparatus, enlarging an image buffer of the display apparatus, accelerating image rendering via the graphic processing unit, improving image composition capability of the display apparatus, reducing open graphics library drawing instructions of the display apparatus, and reducing bit depth of the display apparatus.

5. The method for improving system performance of claim 1, wherein the improving system performance of the display apparatus by adopting a preset scheme comprises:
improving the system performance of the display apparatus by improving performance of a central processing unit of the display apparatus;
the method further comprises the follows after the improving the system performance of the display apparatus by improving performance of a central processing unit of the display apparatus:
determining whether an abnormity occurs in vertical synchronous signals within a next period; and
improving the system performance of the display apparatus by improving computation capability of a graphic processing unit of the display apparatus, based on a determination that the abnormity occurs in the vertical synchronous signals within the next period.

6. The method for improving system performance of claim 5, wherein the method further comprises the follows after the improving the system performance of the display apparatus by improving computation capability of a graphic processing unit of the display apparatus:
determining whether an abnormity occurs in vertical synchronous signals within a next period; and
improving the system performance of the display apparatus by enlarging an image buffer of the display apparatus, based on a determination that the abnormity occurs in the vertical synchronous signals within the next period.

7. The method for improving system performance of claim 6, wherein the method further comprises the follows after the improving the system performance of the display apparatus by enlarging an image buffer of the display apparatus:
determining whether an abnormity occurs in vertical synchronous signals within a next period; and
improving the system performance of the display apparatus by accelerating image rendering via the graphic processing unit, based on a determination that the abnormity occurs in the vertical synchronous signals within the next period.

8. The method for improving system performance of claim 7, wherein the method further comprises the follows after the improving the system performance of the display apparatus by accelerating image rendering via the graphic processing unit:
determining whether an abnormity occurs in vertical synchronous signals within a next period; and
improving the system performance of the display apparatus by improving image composition capability of the display apparatus, based on a determination that the abnormity occurs in the vertical synchronous signals within the next period.

9. The method for improving system performance of claim 8, wherein the method further comprises the follows after the improving the system performance of the display apparatus by improving image composition capability of the display apparatus:
determining whether an abnormity occurs in vertical synchronous signals within a next period; and
improving the system performance of the display apparatus by reducing open graphics library drawing instructions of the display apparatus, based on a determination that the abnormity occurs in the vertical synchronous signals within the next period.

10. The method for improving system performance of claim 9, wherein the method further comprises the follows after the improving the system performance of the display apparatus by reducing open graphics library drawing instructions of the display apparatus :
determining whether an abnormity occurs in vertical synchronous signals within a next period; and
improving the system performance of the display apparatus by reducing bit depth of the display apparatus, based on a determination that the abnormity occurs in the vertical synchronous signals within the next period.

11. A device for improving system performance, the device being applied in a display apparatus, the device for improving system performance comprising:
a vertical synchronous signal determining module, configured to determine whether an abnormity occurs in vertical synchronous signals within a period; and
a system performance controlling module, configured to improve, based on a determination that the abnormity occurs in the vertical synchronous signals within the period, system performance of the display apparatus by adopting a preset scheme.

12. The device for improving system performance of claim 11, wherein the vertical synchronous signal determining module configured to determine whether the abnormity occurs in the vertical synchronous signals within the period comprises the follows:
the vertical synchronous signal determining module obtains multiple time intervals by computing a time interval of each two adjacent vertical synchronous signals according to an arrival time of each of the vertical synchronous signals, and determines that the abnormity occurs in the vertical synchronous signals within the period when the multiple time intervals are not identical.

13. The device for improving system performance of claim 11, wherein the vertical synchronous signal determining module configured to determine whether the abnormity occurs in the vertical synchronous signals within the period comprises the follows:
the vertical synchronous signal determining module determines that the abnormity occurs in the vertical synchronous signals within the period when a total number of the vertical synchronous signals within the period is less than a preset value.

14. The device for improving system performance of claim 11, wherein the system performance controlling module configured to improve the system performance of the display apparatus by adopting the preset scheme comprises the follows:
the system performance controlling module improves the system performance of the display apparatus by adopting at least one of following schemes: improving performance of a central processing unit of the display apparatus, improving computation capability of a graphic processing unit of the display apparatus, enlarging an image buffer of the display apparatus, accelerating image rendering via the graphic processing unit, improving image composition capability of the display apparatus, reducing open graphics library drawing instructions of the display apparatus, and reducing bit depth of the display apparatus.

15. The device for improving system performance of claim 11, wherein the system performance controlling module configured to improve the system performance of the display apparatus by adopting the preset scheme comprises the follows:
the system performance controlling module improves the system performance of the display apparatus by improving performance of a central processing unit of the display apparatus;
the vertical synchronous signal determining module is further configured to determine, after the system performance controlling module improves the system performance of the display apparatus by improving the performance of the central processing unit, whether an abnormity occurs in vertical synchronous signals within a next period; the system performance controlling module is further configured to improve, based on a determination that the abnormity occurs in the vertical synchronous signals within the next period, the system performance of the display apparatus by improving computation capability of a graphic processing unit of the display apparatus.

16. The device for improving system performance of claim 15, wherein the vertical synchronous signal determining module is further configured to determine, after the system performance controlling module improves the system performance of the display apparatus by improving the computation capability of the graphic processing unit, whether an abnormity occurs in vertical synchronous signals within a next period; the system performance controlling module is further configured to improve, based on a determination that the abnormity occurs in the vertical synchronous signals within the next period, the system performance of the display apparatus by enlarging an image buffer of the display apparatus.

17. The device for improving system performance of claim 16, wherein the vertical synchronous signal determining module is further configured to determine, after the system performance controlling module improves the system performance of the display apparatus by enlarging the image buffer, whether an abnormity occurs in vertical synchronous signals within a next period; the system performance controlling module is further configured to improve, based on a determination that the abnormity occurs in the vertical synchronous signals within the next period, the system performance of the display apparatus by accelerating image rendering via the graphic processing unit.

18. The device for improving system performance of claim 17, wherein the vertical synchronous signal determining module is further configured to determine, after the system performance controlling module improves the system performance of the display apparatus by accelerating the image rendering via the graphic processing unit, whether an abnormity occurs in vertical synchronous signals within a next period; the system performance controlling module is further configured to improve, based on a determination that the abnormity occurs in the vertical synchronous signals within the next period, the system performance of the display apparatus by improving image composition capability of the display apparatus.

19. The device for improving system performance of claim 18, wherein the vertical synchronous signal determining module is further configured to determine, after the system performance controlling module improves the system performance of the display apparatus by improving the image composition capability of the display apparatus, whether an abnormity occurs in vertical synchronous signals within a next period; the system performance controlling module is further configured to improve, based on a determination that the abnormity occurs in the vertical synchronous signals within the next period, the system performance of the display apparatus by reducing open graphics library drawing instructions of the display apparatus.

20. The device for improving system performance of claim 19, wherein the vertical synchronous signal determining module is further configured to determine, after the system performance controlling module improves the system performance of the display apparatus by reducing the open graphics library drawing instructions of the display apparatus, whether an abnormity occurs in vertical synchronous signals within a next period; the system performance controlling module is further configured to improve, based on a determination that the abnormity occurs in the vertical synchronous signals within the next period, the system performance of the display apparatus by reducing bit depth of the display apparatus.

21. A display apparatus comprising:
a memory storing a set of program codes; and
a processor configured to invoke the program codes to perform following acts:
determining whether an abnormity occurs in vertical synchronous signals within a period; and
improving system performance of the display apparatus by adopting a preset scheme, based on a determination that the abnormity occurs in the vertical synchronous signals with the period.
